# EUROPEAN PATENT SPECIFICATION

(11) **EP 1 325 781 B1**
(45) Date of publication and mention of the grant of the patent: **21.03.2007**
(21) Application number: 02000004.8
(22) Date of filing: 02.01.2002
(51) Int. Cl.: B01J 37/02

(54) **Apparatus for coating a catalytic coating solution and process for producing exhaust gas purifying catalyst**
Vorrichtung zum Beschichten mit einer katalytischen Beschichtunglösung und Verfahren zur Herstellung eines Katalysators für die Reinigung von Abgasen
Appareil pour produire un revêtement à partir d'une solution catalytique et procédé de production d'un catalyseur de purification des gaz d'échapement

(43) Date of publication of application: 09.07.2003
(73) Proprietor: Cataler Corporation, Ogasa-gun, Shizuoka-ken, 137-1492 (JP)
(72) Inventor: Horiuchi, Yoshihiro, Ogasa-gun, Shizuoka-ken 437-1492 (JP); Agata, Chiaki, Ogasa-gun, Shizuoka-ken 437-1492 (JP)
(74) Representative: TBK-Patent

(56) References cited:
- EP-A- 0 428 990
- EP-A- 0 941 763
- EP-A- 0 980 710
- US-A- 4 609 563

## Description

### Field of the Invention

The present invention relates to an apparatus for coating a catalytic coating solution on a catalyst support and a process for producing an exhaust gas purifying catalyst.

### Description of the Related Art

An exhaust gas, which is emitted from an internal combustion engine, such as a gasoline engine, and the like, contains harmful components, such as hydrocarbons (HC), carbon monoxide (CO), nitrogen oxides (NOₓ), and so on. When the exhaust gas is emitted as it is, it causes the pollution or the deterioration of environments. Accordingly, the exhaust gas, which contains these harmful components, is emitted in the air after it is purified by using an exhaust gas purifying catalyst, etc.

An ordinary exhaust gas purifying catalyst comprises a catalyst support, a loading layer and a catalyst ingredient. The loading layer is formed on the catalyst support, and is composed of alumina, and the like. The catalytic ingredient is loaded on the loading layer, and is composed of a noble metal, and so on. Moreover, depending on the shapes of the catalyst support, the exhaust gas purifying catalyst is divided into monolith-shaped ones, granular ones, pipe-shaped ones, etc. In addition, as a raw material for the catalyst support, a heat-resistant material is used because the catalyst support is exposed to a high-temperature exhaust gas. As for such a heat-resistant raw material, it is possible to name ceramics, like cordierite, etc., heat-resistant metals, like stainless steels, and so on.

A monolith-shaped or pipe-shaped exhaust gas purifying catalyst is produced by coating a catalytic coating solution on a catalyst support. Here, as the catalytic coating solution, it is possible to name solutions, such as a catalytic slurry for forming a loading layer, a catalytic ingredient solution for loading a catalytic ingredient on a loading layer, and the like.

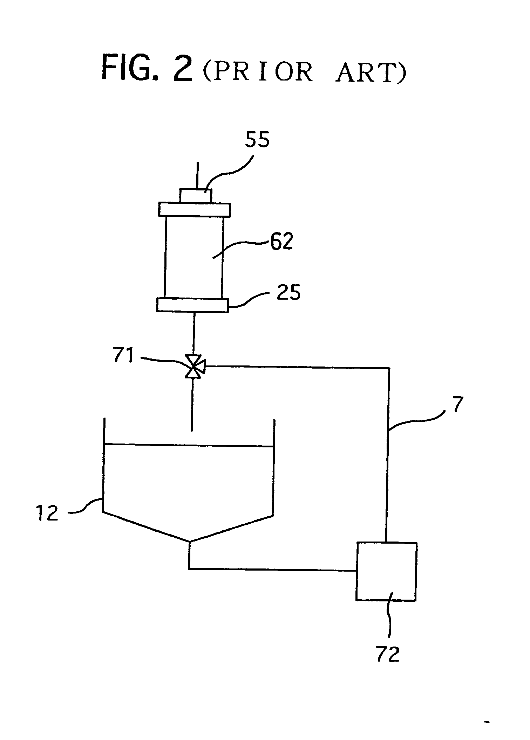

When coating a catalytic coating solution on a catalyst support, the coating has been conventionally carried out by using a coating apparatus as illustrated in Fig. 2, for example.

The conventional coating apparatus such as the apparatus shown in EP-A-0428990 comprises a catalyst-support holding unit 25, a tank 12, a catalytic-coating-solution circulation passage 7, a control valve 71 and a pump 72. The catalyst-support holding unit 25 holds a catalyst support 62. The tank 12 holds a catalytic coating solution therein. The catalytic-coating-solution circulating passage 7 circulates the catalytic coating solution, which is held in the tank 12, outside the tank 12. The control valve 71 is disposed within the catalytic-coating-solution circulating passage 7 so that it supplies the catalytic coating solution to the catalyst-support holding unit 25. The pump 72 is disposed within the catalytic-coating-solution circulating passage 7, and circulates the catalytic coating solution in the catalytic-coating-solution circulating passage 7.

The conventional coating apparatus coats a catalytic coating solution on a catalyst support by the following procedure. First, the control valve 71 is switched to supply a catalytic coating solution to the catalyst-support holding unit 25. The catalytic coating solution, which is supplied to the catalyst-support holding unit 25, is supplied into a tubular passage, which is formed in the catalyst support 62. In this instance, the catalytic coating solution goes into the tubular passage of the catalyst support 62 from the lower opposite end thereof, and is kept to be supplied until its liquid level becomes a predetermined height. Thereafter, the control valve 71 is switched to discharge the catalytic coating solution from the inside of the tubular passage of the catalyst support 62. Here, the catalytic coating solution, which is discharged from the catalyst support 62, is passed through the catalytic-coating-solution circulating passage 7 so that it is discharged back into the tank 12.

In such a conventional coating apparatus, a coating amount of the catalytic coating solution on the catalyst support 62 is detected in the following manner. A rod-shaped leveler 55 is fitted into the tubular passage of the catalyst support 62 from the opposite upper end thereof. When the leveler 55 contacts with the catalytic coating solution with its leading end, a coating amount of the catalytic coating solution on the catalyst support 62 is detected.

The coating apparatus might be associated with such problems in that it is large-sized, the shapes of the catalyst support 62 are restricted, the catalytic coating solution deposits outside the coating range when the leveler 55 is fitted into the catalyst support 62 or it is removed therefrom.

Specifically, the enlargement of the conventional coating apparatus might be caused by the increasing number of component instruments outside the tank 12, such as the catalytic-coating-solution circulation passage 7, the pump 72, the control valve 71, and so on. Moreover, the shapes of the catalyst support 62 might be restricted because it might be difficult to fit the leveler 55 into or remove it from the tubular passage of the catalyst support 61 when the catalyst support 61 is formed as a bent shape. In addition, there might arise a problem in that, since the leveler 55 detects the amount of the catalytic coating solution when it contacts with the catalytic coating solution at the leading end, the catalytic coating solution flows out of the catalyst support 62 to deposit on the outer surface thereof when the leveler 55 is removed therefrom.

### SUMMARY OF THE INVENTION

The present invention has been developed in view of the aforementioned circumstances. It is therefore an object of the present invention to provide a coating apparatus, which is not only downsized but also can carry out detecting the coating amount of a catalytic coating solution onto a catalytic support with ease, and a process for producing an exhaust gas purifying catalyst.

In order to achieve the aforementioned object, the present inventors have examined conventional coating apparatuses over and over again. As a result, they found out that, while means for holding a catalytic coating solution therein and a tubular passage of a catalyst support were communicated with each other so that they were filled up with the catalytic coating solution, the liquid level in the catalytic-coating-solution holding means equaled the liquid level in the tubular passage of the catalyst support when the catalytic coating solution was supplied into the tubular passage of the catalyst support. Thus, they have discovered a way which can achieve the aforementioned object by utilizing the phenomenon, and have completed the present invention.

Namely, an apparatus for coating a catalytic coating solution according to the present invention comprises: means for holding a catalyst support having a tubular passage so as to extend the tubular passage upward or downward; means for holding a catalytic coating solution therein; means for flowing the catalytic coating solution therein, the means having opposite opened ends, one of the opened ends opening to the catalytic-coating-solution holding means and the other opened ends opening to a lower end of the catalyst support; and means for driving at least one of the catalytic-coating-solution holding means and the catalyst-support holding means; wherein the driving means reciprocates at least one of the catalytic-coating-solution holding means and the catalyst-support holding means upward and downward to supply the catalytic coating solution to the catalyst support or to discharge the catalytic coating solution therefrom, thereby coating the tubular passage of the catalyst support with the catalytic coating solution.

Since the present coating apparatus is not provided with a passage in which the catalytic coating solution, held in the catalytic-coating-solution holding means, circulates, it is possible to downsize the present coating apparatus as a whole. Moreover, in the present coating apparatus, it is possible to detect a coating amount of the catalytic coating solution onto the catalytic support by a liquid level of the catalytic coating solution, which is held in the catalytic-coating-solution holding means. Thus, the present coating apparatus effects an advantage in that, even when the tubular passage of the catalyst support is bent, the detection of the coating amount of the catalytic coating solution onto the catalyst support can be carried out with ease.

Moreover, a process for producing an exhaust gas purifying catalyst according to the present invention, while a catalyst support having a tubular passage is held by means for holding the catalyst support so as to extend the tubular passage upward or downward and a catalytic coating solution is held by means for holding the catalytic coating solution therein, the catalytic-coating-solution holding means being connected to the tubular passage of the catalyst support by way of means for flowing the catalytic coating solution therein, the catalytic-coating-solution flowing means communicating the tubular passage of the catalyst support with the catalytic-solution-holding means, comprises the steps of: supplying the catalytic coating solution to the catalyst support by moving the catalytic-coating-solution holding means upward and/or by moving the catalyst-support holding means downward; and discharging the catalytic coating solution from the catalyst support by moving the catalytic-coating-solution holding means downward and/or by moving the catalyst-support holding means upward after the catalytic coating solution is supplied to the catalyst support in the catalytic-coating-solution supplying step.

In the present process for producing an exhaust gas purifying catalyst, it is possible to coat the catalytic coating solution onto the catalyst support by reciprocating the catalytic-coating-solution holding means and/or the catalytic-support holding means upward and downward. Accordingly, it is possible to adjust the supply volume of the catalytic coating solution to the catalyst support as well as the discharge volume of the catalytic coating solution from the catalyst support by controlling a moving magnitude of the catalytic-coating-solution holding means and/or the catalyst-support holding means. Thus, since the present production process makes it possible to carry out the coating of the catalytic coating solution onto the catalyst support by the simplified way, it can reduce the cost required for producing an exhaust gas purifying catalyst.

Hence, in accordance with the invention, the present coating apparatus supplies the catalytic coating solution to the catalyst support and discharges it therefrom by reciprocating at least one of the catalytic-coating-solution holding means and the catalyst-support holding means. Accordingly, it is possible to simplify the present coating apparatus as well as to downsize it. Moreover, in the present coating apparatus, the coating amount of the catalytic coating solution onto the catalyst support can be controlled by the liquid level of the catalytic coating solution, which is held in the catalytic-coating-solution holding means. Consequently, the present coating apparatus can be applied to catalyst supports which have any shape. As a result, the present coating apparatus effects an advantage in that its applicable field can be remarkably expanded.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a drawing for illustrating an arrangement of an example of an apparatus for coating a catalytic coating solution according to the present invention; and
Fig. 2 is a drawing for illustrating an arrangement of a conventional apparatus for coating a catalytic coating solution.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

### (Coating Apparatus)

An apparatus for coating a catalytic coating solution according to the present invention comprises catalyst-support holding means, catalytic-coating-solution holding means, catalytic-coating-solution flowing means and driving means.

The catalyst-support holding means holds a catalyst support having a tubular passage so as to extend the tubular passage upward or downward. Since the catalyst-support holding means holds the catalyst support so as to extend the tubular passage extends upward or downward, it is possible to coat a catalytic coating solution onto an inner surface of the tubular passage from the lower end when the catalytic coating solution is supplied into the tubular passage of the catalyst support from the lower end. Moreover, the catalyst-support holding means holds the catalyst support so as to open the tubular passage of the catalyst support at the upper end. Accordingly, when the catalytic coating solution is supplied into the tubular passage of the catalyst support from the lower end, it is possible to fill up the tubular passage of the catalyst support with the catalytic coating solution with ease.

As far as the catalyst support has a tubular passage therein, it is possible to use any catalyst support. For example, as the catalyst support, it is possible to name a pipe-shaped catalyst support, a monolith-shaped catalyst support, and so on. Moreover, the catalyst support cannot necessarily be formed so that it has a linear tubular passage, but can be formed so that it has a bent tubular shape.

In addition, "the tubular passage of the catalyst support, which is held by the catalyst-support holding means, extends upward or downward" means that there can be a phase difference between the opposite ends of the tubular passage in the vertical direction. In other words, the centers of the opposite ends of the tubular passage can be offset or deviated with each other in the vertical direction. The tubular passage can further preferably extend in the vertical direction.

The catalytic-coating-solution holding means holds the catalytic coating solution therein. Here, note that the volume of the catalytic coating solution which is held in the catalytic-coating-solution holding means, is larger than the volume of the catalytic coating solution which goes into the tubular passage of the catalyst support. Since the catalytic-coating-solution holding means holds the catalytic coating solution in such a large volume, it is possible to supply the catalytic coating solution into the tubular passage of the catalyst support by driving at least one of the catalytic-coating-solution holding means and the catalyst-support holding means.

The catalytic coating solution, which is held in the catalytic-coating-solution holding means, is a solution which is coated onto the catalyst support in the production of an exhaust gas purifying catalyst. As the catalytic coating solution, it is possible to name solutions, for example, a catalytic slurry for forming a loading layer, a catalytic ingredient solution for loading a catalytic ingredient on a loading layer, and the like.

The catalytic-coating-solution flowing means is opened to the catalytic-coating-solution holding means at one of the opposite ends, and is opened to the lower end of the catalyst support at the other one of the opposite ends. Thus, the catalytic-coating-solution flowing means communicates the catalytic-coating-solution holding means with the catalyst support. Since the catalytic-coating-solution flowing means communicates the catalytic-coating-solution holding means with the catalyst support, it is possible to supply the catalytic coating solution into the tubular passage of the catalyst support or discharge it therefrom by driving at least one of the catalytic-coating-solution holding means and the catalyst-support holding means with the driving means.

One of the opposite ends of the catalytic-coating-solution flowing means is opened to the catalytic-coating-solution holding means. Specifically, it is opened so that the catalytic coating solution, which is held in the catalytic-coating-solution holding means, can be supplied from and can be discharged back into the catalytic-coating-solution holding means. Moreover, the opening is formed so that it does not interfere with the flow of the catalyst coating solution when the catalytic-coating-solution holding means is driven upward and downward. Specifically, the opening is formed so that it is not exposed above the liquid level of the catalytic coating solution when the catalytic-coating-solution holding means is descended.

The other one of the opposite ends of catalytic-coating-solution flowing means is opened to the lower end of the catalyst support. Specifically, it is opened so that the catalytic-coating-solution flowing means communicates with the tubular passage of the catalyst support.

The driving means drives at least one of the catalytic-coating-solution holding means and the catalyst-support holding means upward and downward. When at least one of the catalytic-coating-solution holding means and the catalyst-support holding means is driven upward and downward, the catalytic coating solution is supplied into the tubular passage of the catalyst support and is discharged therefrom.

In the present coating apparatus, the driving means reciprocates at least one of the catalytic-coating-solution holding means and the catalyst-support holding means upward and downward to supply the catalytic coating solution to the catalyst support or to discharge the catalytic coating solution therefrom, thereby coating the tubular passage of the catalyst support with the catalytic coating solution. Specifically, the catalytic coating solution is supplied to and is discharged from the tubular passage of the catalyst support by reciprocating at least one of the catalytic-coating-solution holding means and the catalyst-support holding means upward and downward. Note that, in the present coating apparatus, the tubular passage of the catalyst support is coated with the catalytic coating solution when the catalytic coating solution is supplied into the tubular passage and is thereafter discharged therefrom. Thus, the present coating apparatus utilizes the phenomenon that the liquid level of the catalytic coating solution, which is held in the catalytic-coating-solution holding means, equals the liquid level of the catalytic coating solution, which is supplied into the tubular passage of the catalyst support.

### (Principle)

The principle of an apparatus for coating a catalytic coating solution according to the present invention will be hereinafter described with reference to a specific case where the catalytic-coating-solution holding means is driven by the driving means.

First, when the catalytic-coating-solution holding means is moved upward relatively with respect to the catalyst support, there arises a liquid-level difference between the catalytic coating solution, which is supplied into the tubular passage of the catalyst support, and the catalytic coating solution, which is held in the catalytic-coating-solution holding means. Specifically, when the catalytic-coating-solution holding means is moved upward, the liquid level of the catalytic coating solution, which is held in the catalytic-coating-solution holding means, is higher than that of the catalytic coating solution, which is supplied into the tubular passage of the catalytic support. When the liquid-level difference arises, the catalytic coating solution moves so as to make the liquid levels equal. Due to the movement of the catalytic coating solution, the liquid level of the catalytic coating solution, which is held in the catalytic-coating-solution holding means, descends. When the liquid level of the catalytic coating solution, which is held in the catalytic-coating-solution holding means, descends, the catalytic coating solution moves to the catalytic-coating-solution flowing means as well as to the catalyst support in such a volume that complies with the descended magnitude of the liquid level. In the tubular passage of the catalyst support into which the catalytic coating solution is moved, the liquid level of the catalytic coating solution ascends. When the liquid level ascends, the catalytic coating solution is supplied into the tubular passage of the catalyst support so that the tubular passage is coated with the catalytic coating solution.

On the other hand, when the catalytic-coating-solution holding means is moved downward relatively with respect to the catalyst support, the liquid level of the catalytic coating solution, which is held in the catalytic-coating-solution holding means, is lower than that of the catalytic coating solution, which is supplied into the tubular passage of the catalytic support. When the liquid-level difference arises, the catalytic coating solution moves so as to make the liquid levels equal. Due to the movement of the catalytic coating solution, the liquid level of the catalytic coating solution, which is held in the catalytic-coating-solution holding means, ascends. When the liquid level of the catalytic coating solution, which is held in the catalytic-coating-solution holding means, ascends, the catalytic coating solution moves back into the catalytic-coating-solution holding means from the catalyst support by way of the catalytic-coating-solution flowing means in such a volume that complies with the ascended magnitude of the liquid level. In the tubular passage of the catalyst support in which the catalytic coating solution is moved, the liquid level of the catalytic coating solution descends. The descending of the liquid level of the catalytic coating solution, which is supplied into the tubular passage of the catalyst support, means that the catalytic coating solution is discharged out of the tubular passage of the catalyst support.

Since the atmospheric pressure, which is applied to the catalytic coating solution supplied into the tubular passage of the catalyst support, is equal to the atmospheric pressure, which is applied to the catalytic coating solution held in the catalytic-coating-solution holding means, it results in the phenomenon that the liquid level of the catalytic coating solution, which supplied into the tubular passage of the catalyst support, equals the liquid level of the catalytic coating solution, which is held in the catalytic-coating-solution holding means. Specifically, when a difference arises between a pressure, which is applied to the liquid surface of the catalytic-coating solution, which is supplied into the tubular passage of the catalyst support, and a pressure, which is applied to the liquid surface of the catalytic coating solution held in the catalytic-coating-solution holding means, the liquid level of the catalytic coating solution, to which a lower pressure is applied, ascends by the Pascal's law. However, when the pressure, which is applied to the catalytic coating solution supplied into the tubular passage of the catalyst support, equals the pressure, which is applied to the catalytic coating solution held in the catalytic-coating-solution holding means, an equilibrium arises. Accordingly, the liquid levels become equal.

In accordance with the above-described operations, the present coating apparatus coats the tubular passage of the catalyst support with the catalytic coating solution.

The driving means can preferably drive the catalytic-coating-solution holding means. When the driving means is made to drive the catalytic-coating-solution holding means, it is possible to further downsize the present coating apparatus. This is because the catalytic-coating-solution holding means can transfer the same volume of the catalytic coating solution with a smaller required driving magnitude than the catalyst-support holding means does. Accordingly, it is possible to reduce the moving magnitude of the catalytic-coating-solution holding means.

The present coating solution is operated while the catalytic-coating-solution flowing means is filled up with the catalytic coating solution. In other words, when the catalytic-coating-solution flowing means is filled up with the catalytic coating solution, it is possible to supply the catalytic coating solution into the tubular passage of the catalyst support and discharge it therefrom by relatively driving at least one of the catalytic-coating-solution holding means and the catalyst-support holding means with respect to each other. Here, "the catalytic-coating-solution flowing means is filled up with the catalytic coating solution" refers to a state in which no bubbles, and the like, are involved in the catalytic coating solution. When the catalytic coating solution contains bubbles, the movement of the catalyst coating solution might be interfered in the catalytic-coating-solution flowing means. As a result, it might become difficult to supply the catalytic coating solution into the tubular passage of the catalyst support or discharge it therefrom.

The catalytic-coating-solution flowing means can preferably be disposed under the liquid level of the catalytic coating solution, which is held in the catalytic-coating-solution holding means, as well as the liquid level of the catalytic coating solution, which is supplied into the tubular passage of the catalyst support. When the catalytic-coating-solution flowing means is disposed below the liquid levels, it is possible to fill up the catalytic-coating-solution flowing means with the catalytic coating solution with ease and to inhibit bubbles, and the like, from existing in the catalytic coating solution, which flows in the catalytic-coating-solution flowing means.

The catalyst-support holding means can preferably hold the lower end of the catalyst support. When the catalyst-support holding means holds the lower end of the catalyst support, it is possible to supply the catalytic coating solution into the tubular passage of the catalyst support from below the catalyst support.

The catalyst-support holding means can preferably hold the catalyst support in a liquid-proof manner. When the catalyst-support holding means holds the catalyst support in a liquid-proof manner, it is possible to precisely control the liquid level of the catalytic coating solution, which is supplied into the tubular passage of the catalyst support. Moreover, when the catalyst-support holding means holds the catalyst support in a liquid-proof manner, it is possible to inhibit the catalytic coating solution from being lost. As the way how to hold the catalyst support by the catalyst-support holding means in a liquid-proof manner, it is possible to name, for example, a way in which a portion of the catalyst-support holding means, which contacts with the catalyst support, is made from an elastic substance and is pressed onto the catalyst support so as to establish a liquid-proof state at the interface.

The present coating apparatus can preferably further comprise means for detecting the liquid level of the catalytic coating solution. By detecting the liquid level with the liquid-level detecting means, it is possible to measure the coating amount of the catalytic coating solution onto the tubular passage of the catalyst support.

The liquid-level detecting means can preferably detect the liquid level of the catalytic coating solution, which is held in the catalytic-coating-solution holding means. For instance, when the catalytic-coating-solution holding means is provided with the liquid-level detecting means, it is possible to make the present coating apparatus compact.

The liquid-level detecting means can preferably be an ultrasonic sensor. For example, when an ultrasonic sensor is used, it is possible to measure the liquid level without touching the catalytic coating solution. As a result, it is possible to inhibit the catalytic coating solution from depositing on positions, which are placed off a desirable coating position.

The driving means can preferably adjust a driving magnitude of at least one of the catalytic-coating-solution holding means and the catalyst-support holding means. When the driving means adjusts a driving magnitude of at least one of the catalytic-coating-solution holding means and the catalyst-support holding means, it is possible to adjust the volume of the catalytic coating solution, which is supplied to the catalyst support.

A driving speed of at least one of the catalytic-coating-solution holding means and the catalyst-support means, which is driven by the driving means, is not limited in particular. That is, a difference arises between a driving speed, which is exhibited by at least one of the catalytic-coating-solution holding means and the catalyst-support holding means, and a supply rate, which is exhibited by the catalytic coating solution being supplied into the tubular passage of the catalyst support. Specifically, when a solution, like a catalytic slurry which has a high viscosity, is used as the catalytic coating solution, it takes time to fill up the tubular passage of the catalyst support with the catalytic coating solution because of the high viscosity. Accordingly, the driving speed can preferably be adjusted to a low speed. When the catalytic coating solution has a low viscosity, it is easy to supply the catalytic coating solution into the tubular passage of the catalyst support. Consequently, the driving speed can preferably be adjusted to a high speed.

The present coating apparatus can further preferably comprise arithmetic means. The arithmetic means is connected to the liquid-level detecting means and the driving means so as to calculate a driving magnitude of the driving means from the liquid level detected by the liquid-level detecting means. When the present coating apparatus is provided with the arithmetic means, it is possible to detect the liquid level of the catalytic coating solution which is supplied into the tubular passage of the catalyst support. In addition, it is possible to adjust the volume of the catalytic coating solution which is supplied into the tubular passage of the catalyst support. As a result, it is possible to control the coating amount of the catalytic coating solution onto the tubular passage of the catalyst support.

The catalytic-coating-solution holding means of the present coating apparatus can preferably have means for stirring the catalytic coating solution held therein. When the catalytic-coating-solution holding means is provided with the stirring means, it is possible to keep the catalytic coating solution uniform. Specifically, when a catalytic slurry is used as the catalytic coating solution, a viscosity of the catalytic slurry fluctuates because the particulate components, which are dispersed in the catalytic slurry, are bound loosely with each other by the intermolecular forces if the catalytic slurry is held as it is in the catalytic-coating-solution holding means. When the viscosity of the catalytic slurry fluctuates, the amount of a catalytic ingredient, which is loaded on the catalyst support, is varied as well. Accordingly, when a loading layer is formed, the resulting loading layer fluctuates in view of the catalytic ingredient loading amount, and it is not preferable.

In addition, the catalytic-coating-solution holding means of the present coating apparatus can preferably have means for controlling a temperature of the catalytic coating solution held therein. With such means, when a catalytic slurry is used as the catalytic coating solution, it is possible to keep a viscosity of the catalytic coating solution constant. The temperature control means is a preferable option because the variation of the viscosity depends on the variation of the temperature.

In the present coating apparatus, it is possible to coat the tubular passage of the catalyst support with the catalytic coating solution by driving at least one of the catalytic-coating-solution holding means and the catalyst-support holding means with the driving means. Thus, the present coating apparatus is simplified. As a result, it is possible to reduce the cost required for maintaining the present coating apparatus. Moreover, the present coating apparatus effects an advantage in that it can be downsized.

### (Process for Producing Exhaust Gas Purifying Apparatus)

A process for producing an exhaust gas purifying catalyst according to the present invention comprises a catalytic-coating-solution supplying step and a catalytic-coating-solution discharging step.

The present production process is carried out while a catalyst support having a tubular passage is held by means for holding the catalyst support so as to extend the tubular passage upward or downward and a catalytic coating solution is held by means for holding the catalytic coating solution therein, the catalytic-coating-solution holding means being connected to the tubular passage of the catalyst support by way of means for flowing the catalytic coating solution therein, the catalytic-coating-solution flowing means communicating the tubular passage of the catalyst support with the catalyst-coating-solution holding means.

As far as the catalyst support has a tubular passage therein, it is possible to use any catalyst support. For example, as the catalyst support, it is possible to name a pipe-shaped catalyst support, a monolith-shaped catalyst support, and so on. Moreover, the catalyst support cannot necessarily be formed so that it has a linear tubular passage, but can be formed so that it has a bent tubular shape.

In addition, "the tubular passage of the catalyst support, which is held by the catalyst-support holding means, extends upward or downward" means that there can be a phase difference between the opposite ends of the tubular passage in the vertical direction. In other words, the centers of the opposite ends of the tubular passage can be offset or deviated with each other in the vertical direction. The tubular passage can further preferably extend in the vertical direction.

The catalytic coating solution, which is held in the catalytic-coating-solution holding means, is a solution which is coated onto the catalyst support in the production of an exhaust gas purifying catalyst. As the catalytic coating solution, it is possible to name solutions, for example, a catalytic slurry for forming a loading layer, a catalytic ingredient solution for loading a catalytic ingredient on a loading layer, and the like.

In the catalytic-coating-solution supplying step, the catalytic coating solution is supplied to the catalyst support by moving the catalytic-coating-solution holding means upward and/or by moving the catalyst-support holding means downward. Specifically, in the catalytic-coating-solution supplying step, the catalytic coating solution is supplied into the tubular passage of the catalyst support by moving the catalytic-coating-solution holding means upward and/or by moving the catalyst-support holding means downward.

In the catalytic-coating-solution discharging step, the catalytic coating solution is discharged from the catalyst support by moving the catalytic-coating-solution holding means downward and/or by moving the catalyst-support holding means upward after the catalytic coating solution is supplied to the catalyst support in the catalytic-coating-solution supplying step.

In the present production process, the catalytic coating solution is supplied into the tubular passage of the catalyst support and is discharged therefrom in accordance with the same principle as the above-described principle of the present coating apparatus.

In both of the catalytic-coating-solution supplying step and catalytic-coating-solution discharging step, it is preferable to move the catalytic-coating-solution holding means. When the catalytic-coating-solution holding means is thus moved, it is possible to downsize a coating apparatus which is used in the present production process. This is because the catalytic-coating-solution holding means can transfer the same volume of the catalytic coating solution with a smaller required driving magnitude than the catalyst-support holding means does. Accordingly, it is possible to reduce the moving magnitude of the catalytic-coating-solution holding means.

In the present production process, except the catalytic-coating-solution supplying step and catalytic-coating-solution discharging step, it is possible to use the same steps as those of the conventional processes for producing exhaust gas purifying catalysts.

In the present production process, the catalytic coating solution is coated onto the tubular passage of the catalyst support by reciprocating the catalytic-coating-solution holding means and/or the catalyst-support holding means. Therefore, it is possible to control the coating amount of the catalytic coating solution onto the tubular passage of the catalyst support within a desired range by adjusting a moving magnitude of the catalytic-coating-solution holding means and/or the catalyst-support holding means.

Moreover, in the present production process, it is possible to supply the catalytic coating solution into the tubular passage of the catalyst support and discharge it therefrom by moving the catalytic-coating-solution holding means and/or the catalyst-support holding means. Accordingly, it is possible to obviate the power, which is produced by the pump, etc., for transferring the catalytic coating solution in the above-described conventional production process. Consequently, it is possible to simplify a coating apparatus, which is used in the present production process.

### Example

The present invention will be hereinafter described in detail with reference to a specific example.

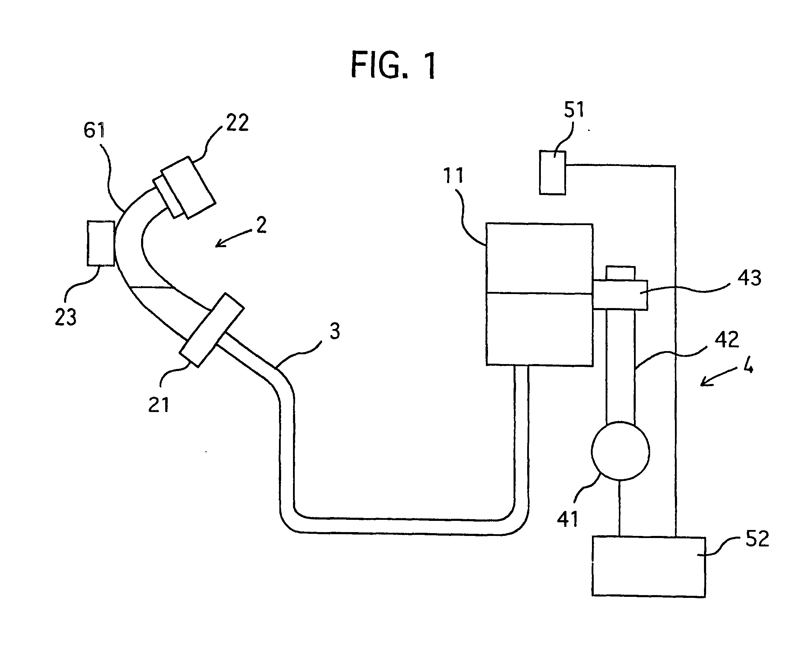

As an example according to the present invention, a coating apparatus as illustrated in Fig. 1 was manufactured. The coating apparatus was arranged so as to coat a catalytic coating solution inside a bent tubular catalyst support.

The coating apparatus of the example comprised a tank 11, a catalyst-support holding unit 2, a catalytic-coating-solution distributor pipe 3, a sensor 51, a driving unit 4 and an arithmetic unit 52. The tank 11 held a catalytic coating solution therein. The catalyst-support holding unit 2 held a catalyst support 61. The catalytic-coating-solution distributor pipe 3 was made of a pipe conduit which communicated the tank 11 with the catalyst-support holding unit 2. The sensor 51 measured a liquid level of the catalytic coating solution which is held in the tank 11. The driving unit 4 drove the tank 11 in the vertical direction. The arithmetic unit 52 was connected to the sensor 51 and driving unit 4.

The tank 11 had a vessel shape which was opened at the upper portion. The catalytic coating solution was held in the vessel-shaped portion. Moreover, not shown in Fig. 1, a stirring impeller was disposed in the tank 11 so as to stir the catalytic coating solution which is held in the tank 11.

The catalyst-support unit 2 comprised a lower-end holding portion 21, an upper-end holding portion 22 and a side-surface holding portion 23. The lower-end holding portion 21 held the lower end of the catalyst support 61. The upper-end holding portion 22 held the upper end of the catalyst support 61. The side-surface holding portion 23 held a side surface of the catalyst support 61. Note that the catalyst-holding unit 2 held the catalyst support 61 so as to move a tubular passage of the catalyst support 61 upward or downward direction. Moreover, the holding portion 21 (not shown) was provided with a not-shown cylinder. By actuating the cylinder, the lower-end holding portion 21 was pushed onto the lower end of the catalyst support 61 so as to press together the lower-end holding portion 21 and the catalyst support 61 closely with each other.

The catalytic-coating-solution distributor pipe 3 was opened to the lower-end surface of the vessel-shaped tank 11 at one of the opposite ends, and was opened to the lower-end holding portion 21 at the other one of the opposite ends so as to communicate the tank 11 with the tubular passage of the catalyst support 61. The catalytic-coating-solution distributor pipe 3 was made of a flexible pipe conduit in which a fluorocarbon resin film was formed on the inner surface and which had an inside diameter of 25 mm. Moreover, the catalytic-coating-solution distributor pipe 3 was placed at a lower position below a liquid level of the catalytic coating solution which was held in the tank 11.

In addition, the catalytic-coating-solution distributor pipe 3 was connected to the tank 11 and lower-end holding portion 21 by fastening the opposite ends to the tank 11 and lower-end holding portion 21 with bands for fastening hoses. Besides that, the catalytic-coating-solution distributor pipe 3 was connected to the tank 11 and lower-end holding portion 21 with certain slackening so that it does not interfere with the movements of the tank 11 and lower-end holding portion 21.

The driving unit 4 comprised a motor 41, a male-screwed shaft 42 and a nut-shaped portion 43. The male-screwed shaft 42 was made by forming a male screw around a rotary shaft of the motor 41. The nut-shaped portion 43 was made by forming a female screw therein, was reciprocated by a rotation of the male-screw shaft 42 in the direction in which the male-screw shaft 42 extends, and was bonded to the tank 11.

In the driving unit 4, the male-screwed shaft 42 was rotated by actuating the motor 41, the nut-shaped portion 43 was reciprocated in the vertical direction by the rotation of the male-screwed shaft 42. When the nut-shaped portion 43 was reciprocated, the tank 11, which was bonded to the nut-shaped portion 43, was reciprocated together therewith.

The sensor 51 was disposed over the tank 11. The sensor 51 applied an ultrasonic wave to a liquid surface of the catalytic coating solution which was held in the tank 11, and detected an ultrasonic wave which was reflected from the liquid surface. Thus, the sensor 51 measured a distance between itself and the liquid surface of the catalytic coating solution.

The distance between the sensor 51 and the liquid level, which was measured by the sensor 51, was transmitted to the arithmetic unit 52. The arithmetic unit 52 calculated a liquid level of the catalytic coating solution which was held in the tank 11. From the resulting liquid level, the arithmetic unit 52 calculated a liquid level of the catalytic coating solution which was placed on the side of the lower-end holding portion 21. Thereafter, the arithmetic unit 52 calculated a difference between a current coating amount and a desired coating amount, and determined a driving magnitude of the tank 11 so as to comply with the resulting difference. Then, the arithmetic unit 52 controlled the operation of the motor 41 in accordance with the determined driving magnitude.

### (Production of Exhaust Gas Purifying Catalyst)

A pipe-shaped catalyst was produced by using the coating apparatus of the example.

A pipe-shaped catalyst was produced in the following manner. A catalytic slurry was coated in advance onto an inner peripheral surface of a catalyst support for making a pipe-shaped catalyst. The catalytic slurry was dried and calcined. Thereafter, a catalytic noble metal solution was further coated onto the inner periphery of the catalyst support. The catalytic -noble metal solution was dried and calcined. Thus, a pipe-shaped catalyst was produced. Note that the coating apparatus of the example was used when the catalytic slurry was coated as well as when the catalytic noble metal solution was coated.

As illustrated in Fig. 1, The catalyst support for the pipe-shaped catalyst was formed of a pipe which was bent like an arc. The pipe had an inside diameter of φ 46 mm, and was made of a stainless steel.

### (Coating Catalytic Slurry)

First of all, the catalyst support 61 was held by the catalyst-support holding unit 2. Specifically, the lower end of the catalyst support 61 was held by the lower-end holding portion 21, the upper end thereof was held by the upper-end holding portion 22, and a side surface thereof was held by the side-surface holding portion 23. Subsequently, the cylinder was actuated so that the lower-end holding portion 21 and catalyst support 61 were pressed together closely with each other. By thus pressing the lower-end portion 21 and catalyst support 61 together closely with each other, the catalyst-support holding unit 2 held the catalyst support 61 in a liquid-proof manner.

Successively, a catalytic slurry was charged into the tank 11 which was placed at a predetermined height. When the catalytic coating solution was charged into the tank 11, it flowed through the catalytic-coating-solution distributor pipe 3, and filled up the catalytic-coating-solution distributor pipe 3 to the side of the catalyst-support holding unit 2. At this moment, the liquid level of the catalytic slurry, which was placed on the side of the catalyst support holding unit 2, was placed at a position lower than the catalyst support 61. Note that, when the catalytic slurry was charged into the tank 11, it was stirred by the not-shown stirring impeller.

Thereafter, the driving unit 4 was actuated so that the tank 11 was moved upward in the vertical direction. When the tank 11 was moved in the vertical direction, the liquid level of the catalytic slurry was ascended on the side of the catalyst-support holding portion 2, and thereby the catalytic slurry was supplied into the tubular passage of the catalyst support 61. Note that, in this instance, the ascending speed of the tank 11 was 20 mm/sec.

In the meantime, the liquid level of the catalytic slurry, which was held in the tank 11, was detected by the sensor 51. The liquid level, which was detected by the sensor 51, was transmitted to the arithmetic unit 52. Then, the arithmetic unit 52 controlled the movement of the tank 11.

When the liquid level of the catalytic slurry arrived at a predetermined height in the catalyst support 61. The movement of the tank 11 was stopped, and the tank 11 was kept halting for 10 seconds in order to stabilize the liquid level of the catalytic slurry.

Thereafter, the driving unit 4 was actuated to descend the tank 11. By descending the tank 11, the catalytic slurry, which was supplied into the tubular passage of the catalyst support 61, was discharged from the catalyst support 61. At this moment, the tank 11 was descended so that the liquid level of the catalytic slurry, which was held in the tank 11, was placed at a lower position below the catalyst support 61.

By the above-described process, the catalytic slurry was coated onto the tubular passage of the catalyst support 61.

The catalyst support 61 with the catalytic slurry coated was dried, and was thereafter calcined. Thus, a loading layer was formed on the inner peripheral surface of the catalyst support 61.

### (Loading Catalytic Noble Metal)

The catalyst support 61 with the loading layer formed on the inner peripheral surface was put in the coating apparatus of the example. Note that, in this instance, a catalytic noble metal solution was charged into the tank 11 instead of the catalytic slurry.

Subsequently, similarly to the coating of the catalytic slurry, the tank 11 was driven upward so as to coat the loading layer with the catalytic noble metal solution in a desired coating amount. Thereafter, the tank 11 was moved downward so as to discharge the catalytic noble metal solution from the catalyst support 61.

The catalyst support 61 with the catalytic noble metal solution coated was dried, and was thereafter calcined. Thus, a pipe-shaped catalyst was produced.

In accordance with the present invention, it was possible to coat the inside of the catalyst support 61 which was formed as an arc shape. Specifically, in accordance with the coating apparatus of the example, it was possible to coat the tubular passage of the catalyst support 61 with the catalytic slurry and catalytic noble metal solution by moving the tank 11 upward and downward. Moreover, even when the catalyst support 61 was bent, it was possible to carry out coating the catalytic slurry and catalytic noble metal solution in desired amounts, respectively.

Having now fully described the present invention, it will be apparent to one of ordinary skill in the art that many changes and modifications can be made thereto without departing from the scope of the present invention as set forth in the appended claims.

An apparatus for coating a catalytic coating solution includes a catalyst-support holding unit, a catalytic-coating-solution holding unit, a catalytic-coating-solution flowing unit and a driving unit. The driving unit reciprocates at least one of the catalytic-coating-solution holding unit and the catalyst-support holding unit upward and downward to supply the catalytic coating solution to the catalyst support or to discharge the catalytic coating solution therefrom, thereby coating the tubular passage of the catalyst support with the catalytic coating solution. The coating apparatus produces advantages in that it can be downsized and it can coat the tubular passage of the catalyst support with the catalytic coating solution whatever shape the catalyst support has.

## Claims

1. An apparatus for coating a catalytic coating solution, comprising:
means (2) for holding a catalyst support (61) having a tubular passage so as to extend the tubular passage upward or downward;
means (11) for holding a catalytic coating solution therein;
means (3) for flowing the catalytic coating solution therein, the means having opposite opened ends, one of the opened ends opening to the catalytic-coating-solution holding means (11) and the other opened ends opening to a lower end of the catalyst support (61);
means (4) for driving at least one of the catalytic-coating-solution holding means (11) and the catalyst-support holding means (2); and
means (51) for detecting a liquid level of the catalytic coating solution;
wherein the driving means (4) reciprocates at least one of the catalytic-coating-solution holding means (11) and the catalyst-support holding means (2) upward and downward to supply the catalytic coating solution to the catalyst support (61) or to discharge the catalytic coating solution therefrom, thereby coating the tubular passage of the catalyst support (61) with the catalytic coating solution.

2. The apparatus according to claim 1, wherein said driving means (4) drives said catalytic-coating-solution holding means (11).

3. The apparatus according to claim 1, wherein said liquid-level detecting means (51) detects a liquid level of the catalytic coating solution held in said catalytic-coating-solution holding means (11).

4. The apparatus according to claim 1, wherein said liquid-level detecting means (51) is an ultrasonic sensor.

5. The apparatus according to claim 1, wherein said driving means (4) is capable of adjusting a driving magnitude of said catalytic-coating-solution holding means (11).

6. The apparatus according to claim 1 further comprising arithmetic means (52) connected to said liquid-level detecting means (51) and said driving means (4) so as to calculate a driving magnitude of said driving means (4) from the liquid level detected by said liquid-level detecting means (51).

7. The apparatus according to claim 1, wherein said catalytic-coating-solution holding means (11) has means for stirring the catalytic coating solution held therein.

8. A process for producing an exhaust gas purifying catalyst, while a catalyst support (61) having a tubular passage is held by means (2) for holding the catalyst support so as to extend the tubular passage upward or downward and a catalytic coating solution is held by means (11) for holding the catalytic coating solution therein, the catalytic-coating-solution holding means (11) being connected to the tubular passage of the catalyst support (61) by way of means (3) for flowing the catalytic coating solution therein, the catalytic-coating-solution flowing means (3) communicating the tubular passage of the catalyst support (61) with the catalytic-coating-solution holding means (11), comprising the steps of:
supplying the catalytic coating solution to the catalyst support (61) by moving the catalytic-coating-solution holding means (11) upward and/or by moving the catalyst-support holding means (2) downward;
discharging the catalytic coating solution from the catalyst support (61) by moving the catalytic-coating-solution holding means (11) downward and/or by moving the catalyst-support holding means (2) upward after the catalytic coating solution is supplied to the catalyst support (61) in said catalytic-coating-solution supplying step; and
detecting a liquid level of the catalytic coating solution by catalytic-coating-solution detecting means (51).

9. The process according to claim 8, wherein the catalytic-coating-solution holding means (11) is moved in both of said catalytic-coating-solution supplying step and said catalytic-coating-solution discharging step.

## Patentansprüche

1. Gerät für das Beschichten mit einer katalytischen Beschichtungslösung mit:
einer Einrichtung (2) für das Halten eines Katalysatorstützkörpers (61), der einen rohrförmigen Durchgang derart besitzt, dass sich der rohrförmige Durchgang in einer Richtung nach oben oder nach unten erstreckt;
einer Einrichtung (11) für das Halten einer katalytischen Beschichtungslösung in sich;
einer Einrichtung (3), in der die katalytische Beschichtungslösung strömen kann, wobei die Einrichtung entgegengesetzte offene Enden besitzt, wobei eines der offenen Enden zu der Halteeinrichtung (11) für die katalytische Beschichtungslösung hin offen ist und das andere Ende zu einem unteren Ende des Katalysatorstützkörpers (61) hin offen ist;
einer Einrichtung (4) für das Antreiben von zumindest entweder der Halteeinrichtung (11) für die katalytische Beschichtungslösung oder die Halteeinrichtung (2) für den Katalysatorstützkörper; und
einer Einrichtung (51) für das Erfassen eines Flüssigkeitspegels der katalytischen Beschichtungslösung;
wobei die Antriebseinrichtung (4) zumindest entweder die Halteeinrichtung (11) für die katalytische Beschichtungslösung oder die Halteeinrichtung (2) für den Katalysatorstützkörper nach oben und nach unten so hin und her bewegt, dass die katalytische Beschichtungslösung dem Katalysatorstützkörper (61) zugeführt wird oder die katalytische Beschichtungslösung von diesen abgegeben wird, wodurch der rohrförmige Durchgang des Katalysatorstützkörpers (61) mit der katalytischen Beschichtungslösung beschichtet wird.

2. Das Gerät gemäß Anspruch 1, wobei die Antriebseinrichtung (4) die Halteeinrichtung (11) für die katalytische Beschichtungslösung antreibt.

3. Gerät gemäß Anspruch 1, wobei die Flüssigkeitspegelserfassungseinrichtung (51) einen Flüssigkeitspegel der katalytischen Beschichtungslösung erfasst, die in der Halteeinrichtung (11) für die katalytische Beschichtungslösung gehalten wird.

4. Gerät gemäß Anspruch 1, wobei die Flüssigkeitspegelerfassungseinrichtung (51) ein Ultraschallsensor ist.

5. Gerät gemäß Anspruch 1, wobei die Antriebseinrichtung (4) in der Lage ist, einen Antriebsbetrag der Halteeinrichtung (11) für die katalytische Beschichtungslösung einzustellen.

6. Gerät gemäß Anspruch 1, das des Weiteren Folgendes aufweist:
eine Recheneinrichtung (52), die mit der Flüssigkeitspegelerfassungseinrichtung (51) und der Antriebseinrichtung (4) so verbunden ist, dass ein Antriebsbetrag der Antriebseinrichtung (4) aus dem Flüssigkeitspegel berechnet wird, der durch die Flüssigkeitspegelerfassungseinrichtung (51) erfasst wird.

7. Gerät gemäß Anspruch 1, wobei die Halteinrichtung (11) für die katalytische Beschichtungslösung eine Einrichtung für das Umrühren der in ihr gehaltenen katalytischen Beschichtungslösung besitzt.

8. Verfahren für das Herstellen eines Abgasreinigungskatalysators, wobei ein Katalysatorstützkörper (61), der einen rohrförmigen Durchgang besitzt, durch eine Einrichtung (2) für das Halten des Katalysatorstützkörpers so gehalten wird, dass sich der rohrförmige Durchgang in eine Richtung nach oben oder nach unten erstreckt, und eine katalytische Beschichtungslösung durch eine Einrichtung (11) für das Halten der katalytischen Beschichtungslösung in ihr gehalten wird, wobei die Halteeinrichtung (11) für die katalytische Beschichtungslösung mit dem rohrförmigen Durchgang des Katalysatorstützkörpers (61) mit Hilfe einer Einrichtung (3), in der die katalytische Beschichtungslösung strömen kann, verbunden ist, wobei die Strömungseinrichtung (3) für die katalytische Beschichtungslösung den rohrförmigen Durchgang des Katalysatorstützkörpers (61) mit der Halteeinrichtung (11) für die katalytische Beschichtungslösung verbindet, wobei das Verfahren die folgenden Schritte beinhaltet:
Zuführen der katalytischen Beschichtungslösung zu dem Katalysatorstützkörper (61) durch das Bewegen der Halteeinrichtung (11) der katalytischen Beschichtungslösung in einer Richtung nach oben und/oder durch das Bewegen der Halteeinrichtung (2) für den Katalysatorstützkörper nach unten;
Abgeben der katalytischen Beschichtungslösung von dem Katalysatorstützkörper (61) durch das Bewegen der Halteeinrichtung (11) der katalytischen Beschichtungslösung in einer Richtung nach unten und/oder durch das Bewegen der Halteeinrichtung (2) des Katalysatorstützkörpers nach oben, nachdem die katalytische Beschichtungslösung dem Katalysatorstützkörper (61) in dem Zuführschritt für die katalytische Beschichtungslösung zugeführt wurde; und
Erfassen eines Flüssigkeitspegels der katalytischen Beschichtungslösung durch eine Erfassungseinrichtung (51) für die katalytische Beschichtungslösung.

9. Verfahren gemäß Anspruch 8, wobei die Halteinrichtung (11) für die katalytische Beschichtungslösung in sowohl dem Zuführschritt der katalytischen Beschichtungslösung als auch dem Ablassschritt der katalytischen Beschichtungslösung bewegt wird.

## Revendications

1. Dispositif pour produire un revêtement à partir d'une solution de revêtement catalytique, comprenant :
un moyen (2) pour maintenir un support de catalyseur (61) ayant un passage tubulaire de sorte à étendre le passage tubulaire vers le haut ou vers le bas ;
un moyen (11) pour maintenir, dans celui-ci, une solution de revêtement catalytique ;
un moyen (3) pour faire s'écouler, dans celui-ci, la solution de revêtement catalytique, le moyen ayant des extrémités ouvertes opposées, l'une des extrémités ouvertes s'ouvrant au moyen de maintien d'une solution de revêtement catalytique (11) et les autres extrémités ouvertes s'ouvrant à une extrémité inférieure du support de catalyseur (61) ;
un moyen (4) pour entraîner au moins l'un du moyen de maintien d'une solution de revêtement catalytique (11) et le moyen de maintien d'un support de catalyseur (2) ; et
un moyen (51) pour détecter un niveau de liquide de la solution de revêtement catalytique;
dans lequel le moyen d'entraînement (4) anime d'un mouvement de va et vient au moins l'un du moyen de maintien d'une solution de revêtement catalytique (11) et du moyen de maintien du support de catalyseur (2) vers le haut et vers le bas pour alimenter la solution de revêtement catalytique au support de catalyseur (61) ou pour décharger la solution de revêtement catalytique à partir de celui-ci, revêtant ainsi le passage tubulaire du support de catalyseur (61) avec la solution de revêtement catalytique.

2. Dispositif selon la revendication 1, dans lequel ledit moyen d'entraînement (4) entraîne ledit moyen de maintien d'une solution de revêtement catalytique (11).

3. Dispositif selon la revendication 1, dans lequel ledit moyen de détection d'un niveau de liquide (51 ) détecte un niveau de liquide de la solution de revêtement catalytique maintenue dans ledit moyen de maintien d'une solution de revêtement catalytique (11).

4. Dispositif selon la revendication 1, dans lequel ledit moyen de détection d'un niveau de liquide (51) est un capteur ultrasonore.

5. Dispositif selon la revendication 1, dans lequel ledit moyen d'entraînement (4) est capable d'ajuster une magnitude d'entraînement dudit moyen de maintien d'une solution de revêtement catalytique (11).

6. Dispositif selon la revendication 1 comprenant en plus un moyen arithmétique (52) connecté audit moyen de détection d'un niveau de liquide (51) et audit moyen d'entraînement (4) de sorte à calculer une magnitude d'entraînement dudit moyen d'entraînement (4) à partir du niveau de liquide détecté par ledit moyen de détection d'un niveau de liquide (51).

7. Dispositif selon la revendication 1, dans lequel ledit moyen de maintien d'une solution de revêtement catalytique (11) a un moyen pour agiter la solution de revêtement catalytique qui y est maintenue.

8. Procédé pour produire un catalyseur de purification de gaz d'échappement, tandis qu'un support de catalyseur (61) ayant un passage tubulaire est maintenu par un moyen (2) pour maintenir le support de catalyseur de sorte à étendre le passage tubulaire vers le haut ou vers le bas et une solution de revêtement catalytique est maintenue par un moyen (11) pour maintenir, en lui, la solution de revêtement catalytique, le moyen de maintien d'une solution de revêtement catalytique (11) étant connecté au passage tubulaire du support de catalyseur (61) par le biais d'un moyen (3) pour faire s'écouler, en lui, la solution de revêtement catalytique, le moyen d'écoulement de la solution de revêtement catalytique (3) faisant communiquer le passage tubulaire du support de catalyseur (61) avec le moyen de maintien d'une solution de revêtement catalytique (11), comprenant les étapes de :
alimenter la solution de revêtement catalytique au support de catalyseur (61) en déplaçant le moyen de maintien d'une solution de revêtement catalytique (11) vers le haut et/ou en déplaçant le moyen de maintien du support de catalyseur (2) vers le bas ;
décharger la solution de revêtement catalytique depuis le support de catalyseur (61) en déplaçant le moyen de maintien d'une solution de revêtement catalytique (11) vers le bas et/ou en déplaçant le moyen de maintien du support de catalyseur (2) vers le haut après que la solution de revêtement catalytique soit alimentée au support de catalyseur (61) dans ladite étape d'alimentation de solution de revêtement catalytique ; et
détecter un niveau de liquide de la solution de revêtement catalytique par un moyen de détection de solution de revêtement catalytique (51).

9. Procédé selon la revendication 8, dans lequel le moyen de maintien d'une solution de revêtement catalytique (11) est déplacé aussi bien dans de ladite étape d'alimentation de solution de revêtement catalytique que dans ladite étape de déchargement de solution de revêtement catalytique.
